# EUROPÄISCHE PATENTANMELDUNG

(11) **EP 2 261 577 A2**
(43) Veröffentlichungstag der Anmeldung: **15.12.2010**
(21) Anmeldenummer: 10005908.8
(22) Anmeldetag: 08.06.2010
(51) Int. Cl.: F24J 2/52, H01L 31/042

(54) **Traggerüst für eine Photovoltaikfreiflächenanlage**

(30) Priorität: 12.06.2009 DE 102009024738
(71) Anmelder: Adensis GmbH, 01129 Dresden (DE)
(72) Erfinder: Beck, Bernhard, 97332 Volkach OT Dimbach (DE)

(57) **Zusammenfassung**

Es wird ein Traggerüst (1) für eine Photovoltaik-Freiflächenanlage vorgeschlagen mit mehreren an einem Ende von dem Boden wegragende Erdstützen (5, 5'), auf deren anderem Ende Träger (7) aufliegen, auf denen wiederum Modulschienen (9) zur Anbringung von Befestigungsmitteln, insbesondere von Klammern, für Photovoltaikmodule (11) befestigt sind. Die Erdstützen (5) bilden mindestens zwei fluchtende Reihen (3a, 3b) zu mindestens je drei Erdstützen (5) in im wesentlichen Nord-Süd-Richtung. Auf oder zwischen an gleicher Stelle in der Reihe (3a, 3b) liegenden Erdstützen (5, 5') ist jeweils ein Träger (7) in im wesentlichen Ost-West-Richtung montiert. Mindestens zwei Modulschienen (9) sind auf oder zwischen jeweils zwei benachbarten Trägern (7) in im wesentlichen Nord-Süd-Richtung befestigt. Die anderen Enden der Erdstützen (5, 5') liegen alle auf gleichem Niveau über dem Geländegrund (13), so dass die Träger (7) und die Modulschienen (9) im wesentlichen planparallel zum Geländegrund (13) verlaufen. Diese Anordnung erlaubt eine effektive Montage bei kleinem Materialeinsatz, und das Traggerüst (1) bietet wenig Angriffsfläche für Windböen. Jede Reihe (3a, 3b) von Erdstützen umfasst Erdstützen (5, 5') mit zum Teil vergleichsweise starrem und flexiblem Biegeverhalten.

## Beschreibung

Die Erfindung betrifft ein Traggerüst für eine Photovoltaik-Freiflächenanlage mit mehreren an einem Ende von dem Boden wegragende Erdstützen, auf deren anderem Ende Träger aufliegen, auf denen wiederum Modulschienen zur Anbringung von Befestigungsmitteln, insbesondere von Klammern, für Photovoltaikmodule befestigt sind.

Solche Traggerüste sind weitläufig bekannt. Sie haben meistens einen Aufbau, bei dem verschieden lange Boden- oder Erdstützen senkrecht aus der Erde herausragen oder in einem mit der Erde verbundenen Fundament senkrecht eingegossen sind. Die Erdstützen sind in zwei Reihen angeordnet, von denen sowohl die Reihe mit den kurzen als auch die mit den längeren Erdstützen in Ost-West-Richtung verlaufen. Über die freien Enden der Erdstützen werden Balken oder Träger gelegt und befestigt, die ebenfalls in O-W-Richtung verlaufen. Im Ergebnis liegen dann zwei durchgehende Träger über z.B. 100 Meter vor, die jeweils von einer Vielzahl an Erdstützen getragen werden. Einer der durchgehenden Träger liegt auf einem niedrigeren Niveau als der andere, wobei ein Höhenunterschied von z.B. 60 cm bis 80 cm üblich ist. Der Höhenunterschied gibt die Neigung von Modulschienen gegenüber der Bodenebene vor, die senkrecht zu den Trägern verlaufend auf diesen in Nord-Süd Richtung montiert sind. Auf den Modulschienen werden dann die Photovoltaikmodule mit Klammern befestigt. Aus der Gebrauchsmusterschrift AT 010 083 U1 ist zudem ein Traggerüst bekannt, bei dem Erdstützen, Träger und Modulschienen zu einem horizontal ausgerichteten Gerüst miteinander verbunden sind.

Diese Anordnung stellt den Photovoltaikmodulen einen guten Einfallswinkel zur Verfügung, ist aber in der Ausführung aufwendig und relativ massiv konstruiert, um Windkräften, die unter die schräg montierten PV-Module angreifen, widerstehen zu können. Außerdem ist eine automatisierte Montage der PV-Module aufgrund der hohen Neigung schwierig. Hinzu kommt, dass bei Anordnung von mehreren Reihen dieser Art zwischen den Reihen Platz gelassen werden muss, um eine Abschattung des unteren Bereichs der nördlich benachbarten Reihe an PV-Modulen durch die oberen Photovoltaikmodule der südlich benachbarten Reihe an Photovoltaikmodulen zu vermeiden. Schließlich ist auch keine Doppelnutzung von Erdstützen und Trägern derart möglich, dass eine Trägerreihe Modulschienen für zwei Reihen an Photovoltaikmodulen trägt, was zum einen wegen des oben genannten Abstands zwischen den Reihen und wegen der unterschiedlichen Niveaus nicht möglich ist.

Vorliegender Erfindung liegt die Aufgabe zugrunde, oben genannte Nachteile der massiven Konstruktion und des Platzbedarfs zu vermeiden, eine automatisierte Montage der Photovoltaikmodule zu erleichtern und durch Windlast hervorgerufene Schwingungen abzufangen und die damit einhergehenden Kräfte in den Erdboden einzuleiten.

Diese Aufgabe wird erfindungsgemäß dadurch gelöst, dass mindestens zwei zueinander parallel verlaufende Reihen zu jeweils mindestens vier Erdstützen in im wesentlichen Nord-Süd-Richtung gereiht sind, dass auf oder zwischen an gleicher Stelle in der Reihe liegenden Erdstützen jeweils ein Träger in im wesentlichen Ost-West-Richtung montiert ist und dass mindestens eine Modulschienen auf oder zwischen jeweils zwei benachbarten Trägern in im wesentlichen Nord-Süd-Richtung befestigt sind, wobei die anderen Enden der Erdstützen auf gleichem Niveau über dem Geländegrund liegen, so dass die Träger und die Modulschienen im wesentlichen planparallel zum Geländegrund verlaufen, wobei jede parallel fluchtende Reihe von Erdstützen an derselben Position in der Reihe Erdstützen mit einem vergleichsweise starren Biegeverhalten aufweist, und wobei zwischen jeweils zwei aufeinander folgenden Erdstützen mit starrem Biegeverhalten sich mindestens zwei vergleichsweise flexibel biegbare Zwischenerdstützen befinden.

Diese Anordnung erlaubt eine wenig Gelände beanspruchende Montage der PhotovoltaikModule, die dann allerdings parallel zum Grund verlaufen, wodurch eine verringerte Lichtausbeute in Kauf genommen wird.

Die geringere Lichtausbeute kann zum Teil dadurch kompensiert werden, dass die Photovoltaikmodule an den Modulschienen unter einem Neigungswinkel zwischen 2° bis 20° montiert sind. Dabei ist es zweckmäßig, wenn der Neigungswinkel über die Form der Befestigungsmittel bereitgestellt wird. Dieses kann zum Beispiel mittels Klammern geschehen, die den unteren Rand eines Photovoltaikmoduls auf eine Auflagefläche abstützen, die tiefer liegt als der obere Rand des vorhergehenden Photovoltaikmoduls, der auf einer Auflagefläche mit einem höher gelegenen Niveau auf der Klammer aufliegt. Solche Klammern sind prinzipiell auf dem Markt für die Verwendung bei Flachdachanlagen bekannt.

Bei einer nach der Erfindung dimensionierten Großanlage können sich bei einer rechteckigen Ausführung der Anlage Kantenlängen von mehreren Hundert Metern ergeben, was bei Wind zu erheblichen Kräften oder gar zu einer Ausbildung von Schwingungen führen kann. Diesen überhöhten Kräften wird erfindungsgemäß entgegengetreten, indem jede parallel fluchtende Reihe von Erdstützen an derselben Position in der Reihe ein vergleichsweise starres Biegeverhalten aufweist und zwischen jeweils zwei aufeinander folgenden Erdstützen mit starrem Biegeverhalten sich mindestens zwei vergleichsweise flexibel biegbare Zwischenerdstützen befinden. Dieses hat den Vorteil, dass ein Teil der Kräfte über die flexible Biegung der Zwischenerdstützen als Biegemoment in den Boden abgeleitet wird, und lediglich Fixpunkte gesetzt werden, um keine zu großen Verbiegungen zu generieren. Einem Aufschaukeln zu Schwingungen kann durch die Bereitstellung von Federn begegnet werden, wie sie später noch näher beschrieben wird.

Das soweit beschriebene Traggerüst stellt die kleinste Einheit dar, bei der die Vorteile der Erfindung zum Tragen kommen. In der praktischen Anwendung bei Photovoltaik-Großanlagen, die sich über mehrere 100 Meter erstrecken und bei denen Flächen von bis zu einem Quadratkilometer mit PV-Modulen bestückt sind, kann die kleinste Einheit leicht erweitert oder multipliziert werden. So scheinen mindestens vier zueinander parallel verlaufende Reihen zu jeweils mindestens vier Erdstützen und entsprechend vier Trägern eine sinnvolle untere Dimensionierung zu ergeben, um den Einsatz von Baustellenfahrzeugen, Montageautomat, Personal etc. vertreten zu können. Unter "Träger" im Sinne vorliegender Erfindung wird jedes Tragteil verstanden, welches geeignet ist, die Modulschienen zu tragen. Es ist auch nicht notwendig, dass auf oder zwischen zwei Erdstützen jeweils ein eigener, separater Träger montiert ist. Der Träger kann so dimensioniert sein, dass er mehrere Erdstützen überspannt. Insofern liegt dann lediglich ein Teil des Trägers zwischen zwei Erdstützen.

Wie zuvor angesprochen, können sich im Gelände große Flächen mit einer Ansammlung an zusammenhängendem Metall ergeben, die bei einem Gewitter ein attraktives Ziel für Blitze abgibt. Es ist daher vorgesehen, die gesamte Metallmasse in möglichst viele kleine, von einander isolierte Metallmassen aufzuteilen, die nicht mehr als große "Einschlag-Elektrode" für einen Blitz dient. Dies geschieht, indem zumindest eines der Teile: Erdstütze, Träger, Modulschiene oder Befestigungsmittel aus elektrisch isolierendem Material gefertigt ist. Alternative oder auch zusätzlich vorzusehende Maßnahmen sehen vor:
- dass die Erdstützen und die Träger aus Metall gefertigt sind, und dass ein Isolationsmaterial die Träger von den Erdstützen trennt, und/oder
- dass die Träger und die Modulschienen aus Metall gefertigt sind, und dass ein Isolationsmaterial die Modulschienen von den Trägern trennt, und/oder
- dass das Befestigungsmittel aus elektrisch isolierendem Material gefertigt ist.

Die zuvor genannten unterschiedlichen Biegeverhalten können sich dabei aus den Querschnitten der Erdstützen begründen. So zum Beispiel können die Erdstützen Rundrohre mit unterschiedlichen Durchmessern sein, wobei die starren Erdstützen einen größeren Durchmesser als die flexibel biegsamen Erdstützen haben. Als Erdstützen können auch ein IPE oder ein Breitflanschträger eingesetzt werden, die je nach gewünschter Biegerichtung längs oder quer verbaut sind. Die Begriffe "starr" und "flexibel" sind immer relativ zueinander zu sehen und stellen keine Beschränkung bezüglich eines physikalischen Wertes der Biegsamkeit dar.

Es ist vorteilhaft, wenn die starre Biegerichtung bei den Zwischenerdstützen in O-W-Richtung verläuft und bei allen anderen Erdstützen in N-S-Richtung. Dieses hängt mit der später erwähnten Montage der Modulschienen zusammen, die verspannt werden. Die starre Biegerichtung bei den Zwischenerdstützen in O-W-Richtung verhindert, dass sich bei großen Längen Auslenkungen ergeben, die zu einem Aneinanderstoßen der gläsernen PV-Module führen würden. Ebenso ist ein Verbauen der Erdstützen mit vertauschten oder sogar beliebigen Richtungen möglich.

Zur einfachen Herstellung sind die Modulschienen als in der Länge vorkonfektionierte Bänder oder Seile vorgesehen, an deren zumindest einem Ende ein Federelement - vorzugsweise mit einem Isolator zusammen - vorhanden ist. Dann werden mehrere dieser vorkonfektionierten Modulschienen über die Feder und gegebenenfalls den Isolator aneinander geknüpft. Eine solche Vorbereitung der Modulschienen reduziert den Montageaufwand vor Ort, der teurer kommt als in der Fertigungsstätte.

Zur einfachen Montage wiederum ist es vorgesehen, dass die Erdstützen in einem Rastermaß angeordnet sind, und dass die Modulschienen in diesem Rastermaß mit Vorbereitungsmitteln zur Vorbereitung ihrer Fixierung mit den Trägern versehen sind. Das Vorbereitungsmittel ist in seiner einfachsten Form eine Aussparung in oder ein Loch durch die Modulschiene, durch welches später eine Schraube in den Träger gedreht wird, um die Modulschiene am Träger zu fixieren.

Üblicherweise sind die Modulschienen als Aluminiumprofil ausgeführt. Abweichend hierzu ist es zur Reduzierung von Montagezeit vorteilhafterweise vorgesehen, dass die Modulschiene ein Flachbandeisen ist, und dass die Feder durch eine endseitige Wellung des Flachbandeisens realisiert ist.

Zur eingangs im Zusammenhang mit der Aufgabenstellung erwähnten Möglichkeit, eine niedrige Bauhöhe des Traggerüstes zu konzipieren, hat sich eine Höhe der Träger oder Querbalken von 0,5 m bis 1,5 m über Geländegrund, d.h. über Bodenniveau, als ausreichend dargestellt.

Ein mögliches Verfahren zur Montage des Traggerüsts zeichnet sich erfindungsgemäß dadurch aus, dass zunächst die Erdstützen in den Boden fixiert werden, so dass ihre freien Enden alle ungefähr auf dem gleichen Höhenniveau liegen und mehrere parallele, nebeneinander liegende Reihen gebildet werden, dass anschließend die Träger mit den freien Enden der Erdstützen, die nebeneinander an derselben Position der Reihen liegen, verbunden werden, und dass in einem weiteren Schritt die Modulschienen durch Befestigung an einem und Ausübung von Zug an dem anderen Ende gespannt werden und im gespannten Zustand auf den Trägern fixiert werden. Zu dieser Vorgehensweise ist es erforderlich, dass die Modulschienen aus zumindest biegsamem Material, wie zum Beispiel dem erwähnten Flacheisen, gefertigt sind, wenn nicht sogar aus einem flexiblen Material, wie ein Nylon- oder Teflonband, was dann eine integrierte Federwirkung beinhaltet. Das an einem Ende mit dem Träger an einer starren Erdstütze befestigte Band wird mittels einer Seilwinde solange gespannt, bis sich alle Aussparungen auf Höhe weiterer Träger befinden. In dieser Lage wird das Band durch die Löcher hindurch an den Trägern fixiert.

Weitere Vorteile und Ausgestaltungen der Erfindung ergeben sich aus der Beschreibung von Ausführungsbeispielen anhand der Figuren. Es zeigen:
- Fig. 1: eine Aufsicht auf ein Traggerüst für eine Photovoltaik-Anlage,
- Fig.2: einen Längsschnitt entlang der Linie II-II in der Figur 1,
- Fig. 3: einen Querschnitt entlang der Linie III-III in der Figur 1,
- Fig. 4: eine perspektivische Ansicht einer Photovoltaik-Freiflächenanlage,
- Fig. 5: eine einzelne erfindungsgemäße Reihe aus der Anlage nach Figur 4,
- Fig.5a: eine Detailansicht eines Erdstützen-Querschnitts, wobei die Erdstütze in N- S-Richtung starr verbaut ist,
- Fig.5b: eine Detailansicht eines Zwischenerdstützen-Querschnitts, wobei die Zwischenerdstütze in N-S-Richtung flexibel verbaut ist,
- Fig. 6a: einen Träger mit Modulschiene vor dem Spannen und
- Fig. 6b: eine auf dem Träger fixierte Modulschiene nach dem Spannen.

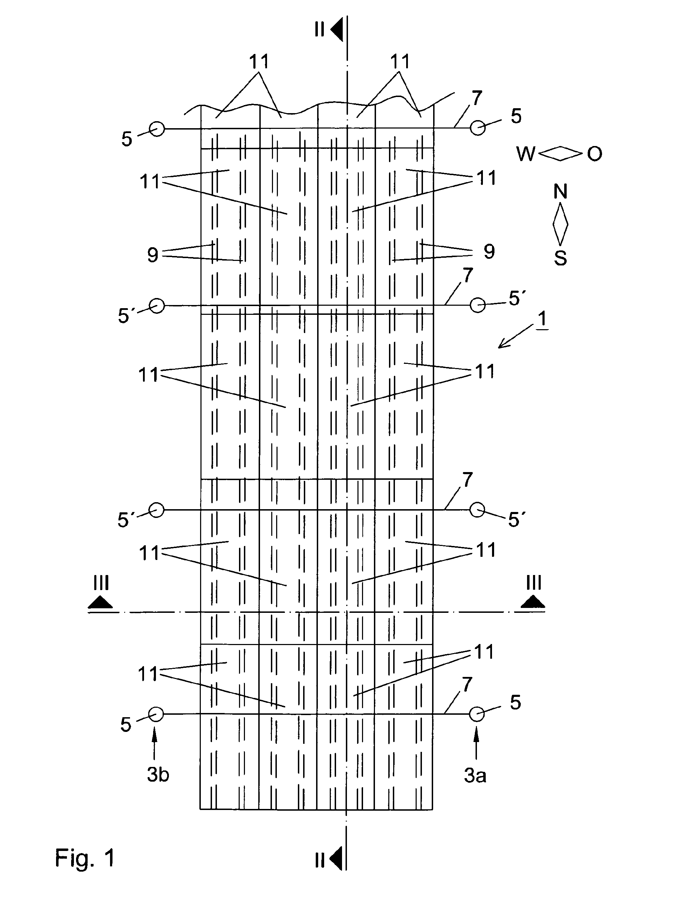

In den Figuren 1 bis 3 ist ein Traggerüst 1 gezeigt, welches zwei parallele Reihen 3a, 3b von Erdstützen 5, 5' aufweist, die in den Boden 13 eingelassen sind. Die Erdstützen 5, 5' sind entweder direkt in den natürlichen Boden eingerammt oder mittels eines Fundamentes (nicht gezeigt) mit dem Boden verbunden. In beiden Fällen ergibt sich auf Bodenniveau ein unverrückbares Auflager für die Erdstützen 5, 5'.

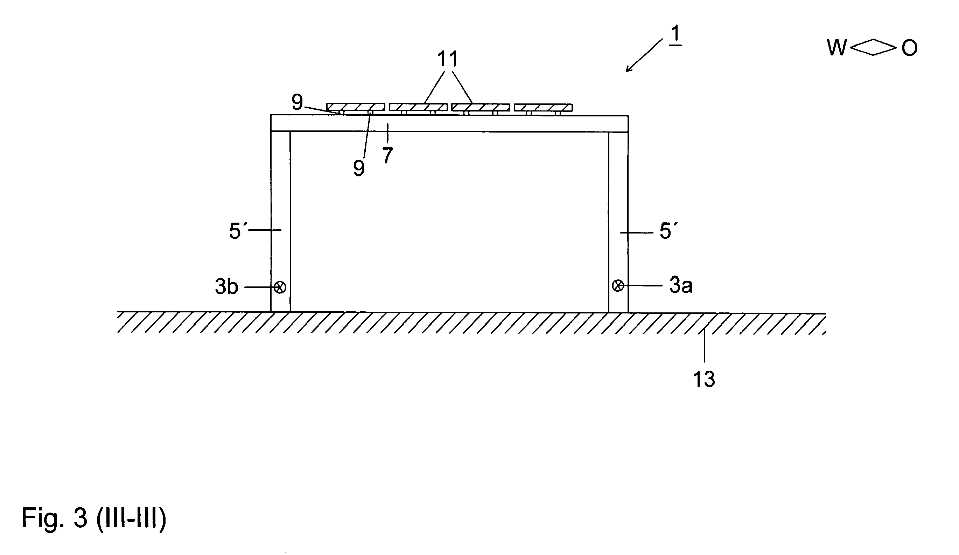

Die Reihen 3a, 3b sind im Gelände in Nord-Süd-Richtung N-S orientiert und an ihrem oberen, also freien Ende, mit Querbalken oder Trägern 7 verbunden. Diese sind in Fig. 1 nur durch eine Linie symbolisiert. Die Verbindung kann nach Fig. 3 durch ein Aufliegen auf der Stirnseite der Erdstützen 5 und dortiger (in Fig. 3 nicht gezeigter) Befestigung erfolgen. Alternativ kann sie mit Hilfe von nicht gezeigten Balkenschuhen erfolgen, so dass die obere Stirnfläche der Erdstützen 5 mit der Oberseite der Träger 7 eine bündige Fläche ergibt. In beiden Fällen wird der lichte Abstand zwischen den Erdstützen 5 in Ost-West-Richtung O-W überbrückt, d.h. dass jeweils zwei an gleicher Stelle in der Reihe 3a, 3b liegende Erdstützen 5 mit einem Träger 7 verbunden werden. Der erste Träger 7 verbindet also die erste Erdstütze 5 der Reihe 3a mit der ersten Erdstütze 5 der Reihe 3b. Der folgende Träger 7 verbindet dann die zweite Erdstütze 5 in der Reihe 3a mit der zweiten Erdstütze 5 der Reihe 3b, usw.

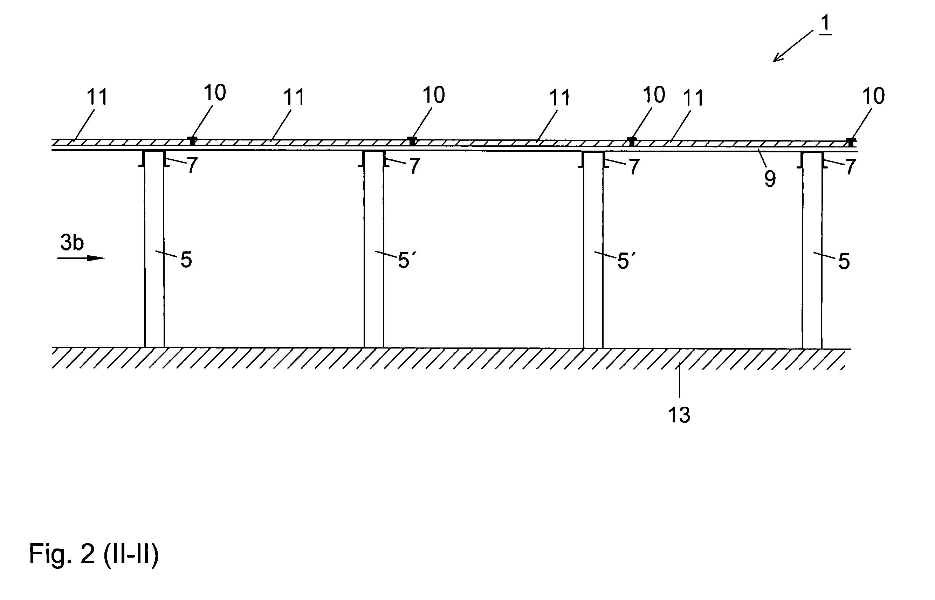

Gemäß Fig. 2 können auch Träger 7 mit einem U-förmigen Profil verwendet werden. Zwischen den einzelnen Trägern 7 sind an sich bekannte Befestigungsmittel 10, z. B. Klammern, angeordnet.

Auf den Trägern 7 sind mindestens zwei Modulschienen 9 in Nord-Süd-Richtung N-S parallel zu einander montiert, die der Aufnahme oder Auflage von mehreren Photovoltaikmodulen 11 dienen. Durch diese Anordnung liegen alle Modulschienen 9 in einer Ebene, die planparallel zu dem Boden 13 verläuft.

Fig. 2 zeigt also eine Variation von Fig. 3: Der Träger 7 ist hier kein Massiv-Balken, sondern ein Träger mit U-förmigem Profil, wobei der Grund des Profils auf der Stirnseite der Erdstütze 5 sitzt.

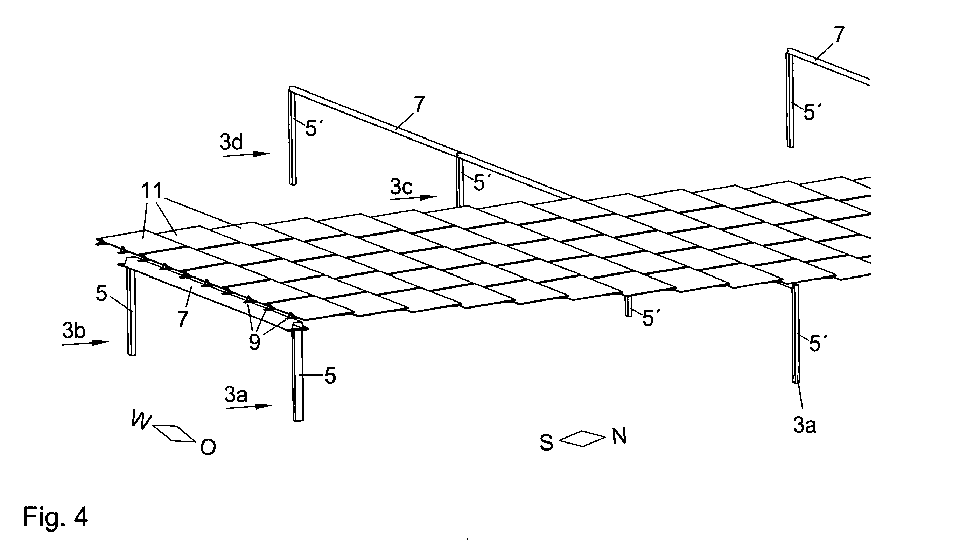

In der Figur 4 ist der Ausschnitt einer Photovoltaik-Anlage (PV-Anlage) für Freiflächen gezeigt, der vier Reihen 3a, 3b,3c und 3d von Erdstützen 5 umfasst. Zwei ist die Mindestzahl an erforderlichen Reihen. Von Erdstütze 5 zu Erdstütze 5 ist jeweils ein Träger 7 montiert, wobei jede Reihe 3a bis 3d durchlaufend mit einer Modulschiene 9, wie bei einer Modelleisenbahn, versehen ist. Es ist auch denkbar, Träger 7 vorzusehen, die mehr als den Abstand zwischen zwei Erdstützen 5 überspannen, so dass sich nicht auf jeder Erdstütze 5 eine Fuge befindet. So können z.B. nur bei jeder zweiten oder dritten Erdstütze 5 die dann entsprechend längeren Träger 7 aneinanderstoßen. In der Figur 4 sind pro Träger 7 acht in Nord-Süd-Richtung verlaufende Modulschienen 9 vorgesehen, die im gezeigten Beispiel vier nebeneinander liegende PV-Module 11 tragen.

Aus Fig. 4 geht hervor, dass diese Photovoltaikmodule 11 an den Modulschienen 9 unter einem Neigungswinkel, z. B zwischen 2° bis 20°, montiert sind.

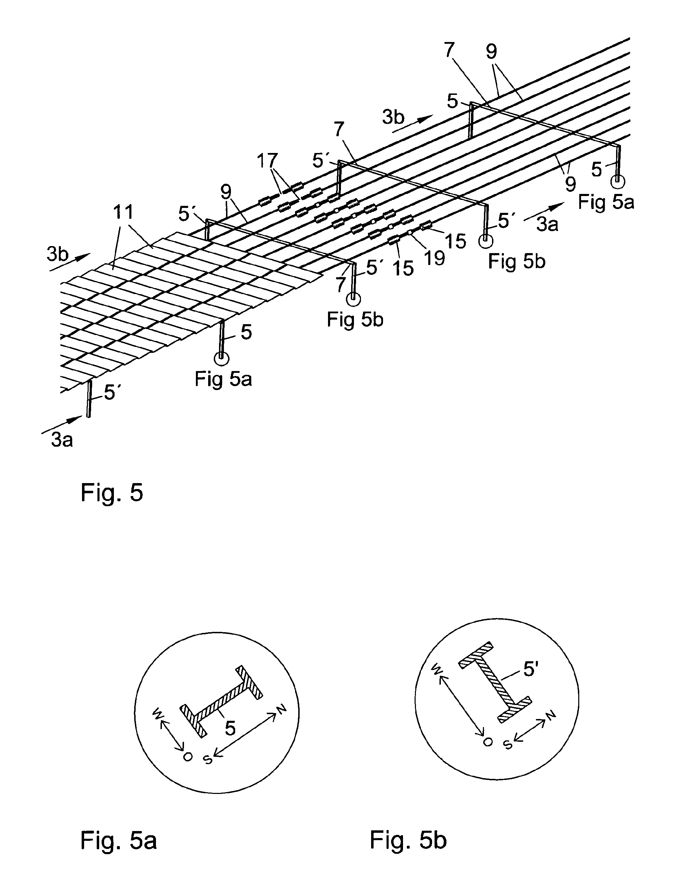

Die Figur 5 zeigt einen Streifen aus der betrachteten PV-Freiflächenanlage, bei dem zwei an erster Stelle ihrer jeweiligen Reihe 3a bis 3b liegende Erdstützen 5 in Folge gezeigt sind. Die acht nebeneinander auf dem Träger 7 liegenden Modulschienen 9 sind jeweils als Flachbandeisen ausgeführt, welches durchlaufend über einen Großteil der Träger 7 geführt ist. Die Länge der Modulschiene 9 in Form des Flachbandeisens wird nur durch die Handhabbarkeit der Rolle, auf der das Flacheisen angeliefert wird, begrenzt. An mindestens einem Ende des Flachbandeisens befindet sich eine Feder 15. Sie wird am einfachsten durch eine Wellung des Flachbandeisens gebildet. Im gezeigten Ausführungsbeispiel ist an benachbarten Enden aufeinander folgender Modulschienen 9 eine Feder 15 vorgesehen. An der Stoßstelle 17 verknüpft ein (symbolisch angedeutetes) Verbindungselement 19 die beiden Flachbandeisen miteinander.

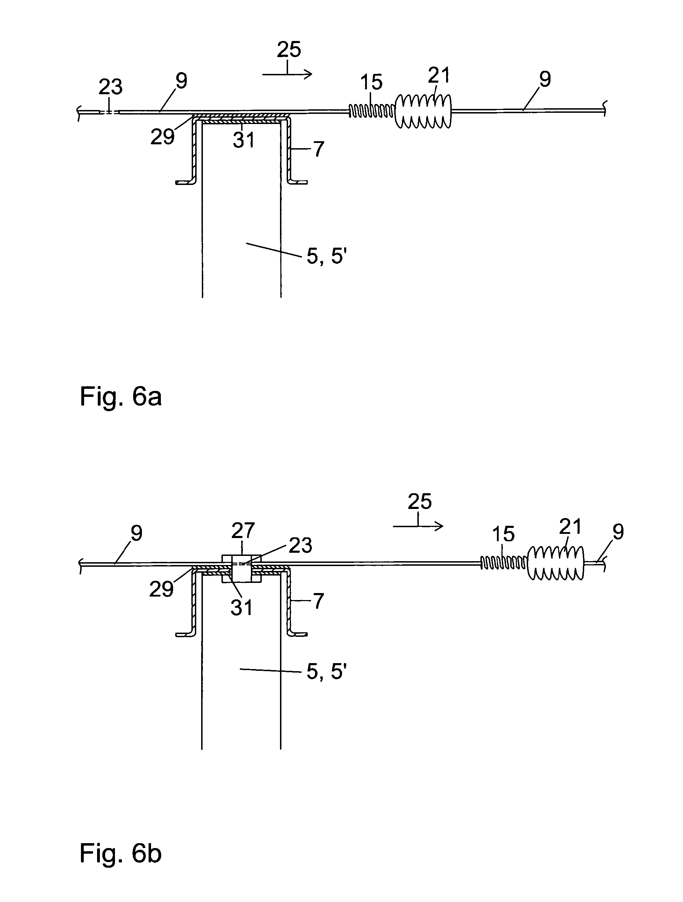

Jeweils vor der Feder 15 ist ein Isolator 21 (vgl. Fig. 6a, 6b) angeordnet, der die beiden zusammengeführten Modulschienen 9 elektrisch voneinander trennt. Solche Isolatoren 21 sind auf dem Gebiet des Freileitungsbaus an sich bekannt und dienen vorliegend dazu, eine lange, durchgehende elektrisch leitende Metallmasse zu vermeiden. Diese wird als Ursache für eine überdurchschnittlich hohe Blitzeinschlagsgefahr bei PV-Freiflächenanlagen angesehen. Bei einer Modulschiene 9 aus elektrisch isolierendem Material kann der Isolator 21 entfallen.

In der Figur 5 sind noch Detailkreise zu den Figuren 5a und 5b eingezeichnet, die die Orientierung der verbauten Breitflanschträger (oder anderer IPE-Träger) als Erdstütze 5 verdeutlichen. Die Figur 5a zeigt dabei den Querschnitt durch eine Erdstütze 5, die starr in die N-S-Richtung orientiert ist, in der die Modulschienen 9 verlaufen. Treten in diese Richtung wirkende Kräfte auf, werden sie durch die Erdstütze 5 aufgenommen und teilweise in den Boden abgeleitet.

Der Detailkreis der Figur 5b zeigt die Erdstütze 5, wie sie verbaut ist, wenn sie als Zwischenerdstütze 5' dient, die zwischen zwei in N-S-Richtung starren Erdstützen 5 liegt. Diese als Zwischenerdstütze 5' bezeichnete Erdstütze 5 ist identisch zu allen Erdstützen 5, unterscheidet sich aber durch ihre Einbauorientierung. Bei den als Zwischenerdstützen 5' dienenden Erdstützen 5 ist der Breitflanschträger mit seinem starren Biegeverhalten in die O-W-Richtung verbaut, und seine flexiblere Biegerichtung ist in der N-S-Richtung orientiert. In der gezeigten Ausführung befinden sich zwei Zwischenerdstützen 5' zwischen jeweils zwei Erdstützen 5. Sollte eine Stoßstelle 17 erforderlich sein, liegt diese vorzugsweise in der Mitte zwischen den zwei Zwischenerdstützen 5'.

Alternativ kann vorgesehen sein, dass die Erdstützen 5 Rundrohre mit unterschiedlichen Durchmessern sind, wobei die starren Erdstützen 5 einen größeren Durchmesser als die flexibel biegsamen Erdstützen 5' haben.

Mit Hilfe der Figuren 6a und 6b wird ein Verfahren zur Montage des Traggerüsts 1 näher erklärt. Die Erdstützen 5, 5' und die Träger 7 werden in an sich bekannter Weise in das Gelände eingebracht, bis eine Planparallelität zum Erdboden 13 vorliegt. Anschließend wird das die Modulschiene 9 bildende Flacheisen von einer Rolle (nicht gezeigt) aus auf die Träger 7 gelegt, so dass sie - ähnlich zu einer Freileitung - zwischen den Trägern 7 durchhängt. In den Figuren 6a und 6b ist eine Aussparung 23 in der Modulschiene 9 ersichtlich, die in der Figur 6a deutlich jenseits und links der Mitte des Trägers 7 liegt. Der Träger 7 ist dabei - im Schnitt gesehen - als topfförmiges Metallteil ausgeführt, dessen innerer Topfgrund auf der freien oberen Stirnseite der Erdstütze 5 anliegt. Bevor die Modulschiene 9 abgerollt und in Position gebracht wird, wird sie an einer der in N-S-Richtung starr verbauten Erdstützen 5 befestigt (nicht gezeigt in Fig. 6a). Es ergibt sich dann das Bild der Figur 6a, wo die Aussparung 23 links neben der Trägermitte liegt. An das nicht fixierte Ende der Modulschiene 9 wird eine Winde angeschlossen, die die links einseitig fixierte Modulschiene 9 in Richtung des Pfeils 25 anzieht.

Die Winde wird solange betätigt, bis die Modulschiene 9 sich so gestrafft hat, dass ihre im Abstand der Träger 7 eingebrachten Aussparungen 23 alle oberhalb des jeweils zugeordneten Trägers 7 sind. Diese Lage ist in der Figur 6b für einen endseitig rechts liegenden Träger 7 dargestellt. Dann wird die Modulschiene 9 auf dem Träger 7 fixiert, z.B. mittels einer herkömmlichen Schrauben-Mutter-Verbindung 27.

In den Figuren 6a und 6b ist noch ein erstes Isoliermittel 29 dargestellt, welches die Modulschiene 9 elektrisch von dem Träger 7 isoliert. Auch ist ein zweites Isoliermittel 31 gezeigt, welches den Träger 7 elektrisch von der Erdstütze 5 isoliert. Beide Maßnahmen dienen wiederum dazu, große elektrisch zusammenhängende Massen von Metall zu vermeiden, um die Einschlagsgefahr für Blitze zu reduzieren.

Zusammenfassend lässt sich sagen, dass bevorzugt vorgesehen ist ein Traggerüst 1 für eine Photovoltaik-Freiflächenanlage mit mehreren an einem Ende von dem Boden wegragenden Erdstützen 5, 5', auf deren anderem Ende Träger 7 aufliegen, auf denen wiederum Modulschienen 9 zur Anbringung von Befestigungsmitteln, insbesondere von Klammern, für Photovoltaikmodule 11 befestigt sind. Die Erdstützen 5 bilden mindestens zwei fluchtende Reihen 3a, 3b zu mindestens je drei Erdstützen 5 in im wesentlichen Nord-Süd-Richtung. Auf oder zwischen an gleicher Stelle in der Reihe 3a, 3b liegenden Erdstützen 5, 5' ist jeweils ein Träger 7 in im wesentlichen Ost-West-Richtung montiert. Mindestens zwei Modulschienen 9 sind auf oder zwischen jeweils zwei benachbarten Trägern 7 in im wesentlichen Nord-Süd-Richtung befestigt. Die anderen Enden der Erdstützen 5, 5' liegen alle auf gleichem Niveau über dem Geländegrund 13, so dass die Träger 7 und die Modulschienen 9 im wesentlichen planparallel zum Geländegrund 13 verlaufen. Diese Anordnung erlaubt eine effektive Montage bei kleinem Materialeinsatz, und das Traggerüst 1 bietet wenig Angriffsfläche für Windböen. Jede Reihe 3a, 3b von Erdstützen umfasst Erdstützen 5, 5' mit zum Teil vergleichsweise starrem und flexiblem Biegeverhalten.

### Bezugszeichenliste

- 1: Traggerüst
- 3a, 3b, 3c, 3d: Reihen an Erdstützen
- 5, 5': Erdstützen
- 7: Träger
- 9: Modulschiene
- 10: Befestigungsmittel
- 11: Photovoltaikmodul
- 13: Geländeboden
- 15: Feder
- 17: Stoßstelle
- 19: Verbindungselement
- 21: Isolator
- 23: Aussparung
- 25: Pfeil
- 27: Schrauben-Mutter Verbindung
- 29: erstes Isoliermittel
- 31: zweites Isoliermittel

## Patentansprüche

1. Traggerüst (1) für eine Photovoltaik-Freiflächenanlage mit mehreren an einem Ende von dem Boden wegragende Erdstützen (5, 5'), auf deren anderem Ende Träger (7) aufliegen, auf denen wiederum Modulschienen (9) zur Anbringung von Befestigungsmitteln (10) für Photovoltaikmodule (11) befestigt sind, **dadurch gekennzeichnet, dass** mindestens zwei zueinander parallel verlaufende Reihen (3a - 3d) zu jeweils mindestens vier Erdstützen (5) gereiht sind, dass auf oder zwischen an gleicher Stelle in der Reihe (3a, 3b) liegenden Erdstützen (5, 5') ein Träger (7) montiert ist, und dass mindestens eine Modulschiene (9) auf oder zwischen jeweils zwei benachbarten Trägern (7) befestigt ist, wobei die anderen Enden der Erdstützen (5, 5') auf gleichem Niveau über dem Geländegrund (13) liegen, so dass die Träger (7) und die Modulschienen (9) im wesentlichen planparallel zum Geländegrund (13) verlaufen, wobei jede parallel fluchtende Reihe (3a bis 3d) von Erdstützen (5, 5') an derselben Position in der Reihe Erdstützen (5) mit einem vergleichsweise starren Biegeverhalten aufweist, und wobei zwischen jeweils zwei aufeinander folgenden Erdstützen (5) mit starrem Biegeverhalten sich mindestens zwei vergleichsweise flexibel biegbare Zwischenerdstützen (5') befinden.

2. Traggerüst nach Anspruch 1, **dadurch gekennzeichnet, dass** die Photovoltaikmodule (11) an den Modulschienen (9) unter einem Neigungswinkel zwischen 2° bis 20° montiert sind.

3. Traggerüst nach einem der Ansprüche 1 oder 2, **dadurch gekennzeichnet, dass** zumindest eines der Teile: Erdstütze (5,5'), Träger (7), Modulschiene (9) oder Befestigungsmittel aus elektrisch isolierendem Material gefertigt ist.

4. Traggerüst nach einem der Ansprüche 1 bis 3, **dadurch gekennzeichnet, dass** sich die unterschiedlichen Biegeverhalten aus den Querschnitten der Erdstützen (5, 5') begründen.

5. Traggerüst nach Anspruch 4, **dadurch gekennzeichnet, dass** die Erdstützen (5) Rundrohre mit unterschiedlichen Durchmessern sind, wobei die starren Erdstützen (5) einen größeren Durchmesser als die flexibel biegsamen Erdstützen (5') haben.

6. Traggerüst nach Anspruch 4, **dadurch gekennzeichnet, dass** die Erdstützen (5,5') ein IPE oder ein Breitflanschträger sind, die je nach gewünschter Biegerichtung längs oder quer verbaut sind.

7. Traggerüst nach Anspruch 6, **dadurch gekennzeichnet, dass** die starre Biegerichtung bei den Zwischenerdstützen (5') in O-W-Richtung verläuft und bei allen anderen Erdstützen (5) in N-S-Richtung.

8. Traggerüst nach einem der Ansprüche 1 bis 7, **dadurch gekennzeichnet, dass** die Modulschienen (9) in der Länge vorkonfektionierte Bänder oder Seile sind, an deren zumindest einem Ende eine Feder (15) vorhanden ist.

9. Traggerüst nach Anspruch 8, **dadurch gekennzeichnet, dass** mehrere Modulschienen (9) über die Feder (15) und gegebenenfalls einen Isolator (21) aneinander geknüpft sind.

10. Traggerüst nach einem der Ansprüche 1 bis 9, **dadurch gekennzeichnet, dass** die Erdstützen (5, 5') in einem Rastermaß angeordnet sind und die Modulschienen (9) in diesem Rastermaß mit Aussparungen (23) zur Vorbereitung ihrer Fixierung mit den Trägern (7) versehen sind.

11. Traggerüst nach einem der Ansprüche 8 bis 10, **dadurch gekennzeichnet, dass** die Modulschiene (9) ein Flachbandeisen ist und die Feder (15) durch eine endseitige Wellung des Flachbandeisens realisiert ist.

12. Traggerüst nach einem der Ansprüche 1 bis 11, **dadurch gekennzeichnet, dass** die Erdstützen (5, 5') in im wesentlichen Nord-Süd-Richtung gereiht sind, dass die Träger (7) in im wesentlichen Ost-West-Richtung und dass die Modulschienen (9) in im wesentlichen Nord-Süd-Richtung gereiht sind.

13. Traggerüst nach einem der Ansprüche 1 bis 12, **dadurch gekennzeichnet, dass** die Träger (7) auf einer Höhe von 0,5 m bis 1,5 m über Geländegrund (13), d.h. über Bodenniveau, liegen.

14. Traggerüst nach einem der Ansprüche 1 bis 13, **dadurch gekennzeichnet, dass** mindestens vier parallel zueinander verlaufende Reihen (3a - 3d) vorgesehen sind.

15. Verfahren zur Montage eines Traggerüsts (1) nach einem der Ansprüche 1 bis 14, **dadurch gekennzeichnet, dass** zunächst die Erdstützen (5, 5') in den Boden (13) fixiert werden, so dass ihre freien Enden alle ungefähr auf dem gleichen Höhenniveau liegen und mehrere parallele, nebeneinander liegende Reihen (3a bis 3d) gebildet werden, dass anschließend die Träger (7) mit den freien Enden der Erdstützen (5, 5'), die nebeneinander an derselben Position der Reihen (3a - 3d) liegen, verbunden werden, und dass in einem weiteren Schritt die Modulschienen (9) durch Befestigung an einem und Ausübung von Zug an dem anderen Ende gespannt werden und im gespannten Zustand auf den Trägern (7) fixiert werden.
